# FASCICULE DE BREVET EUROPEEN

(11) **EP 1 557 688 B1**
(45) Date de publication et mention de la délivrance du brevet: **08.04.2009**
(21) Numéro de dépôt: 05356001.7
(22) Date de dépôt: 03.01.2005
(51) Int. Cl.: G01S 3/803

(54) **Système de mesure acoustique permettant de localiser des sources de bruit**
Akustisches Messsystem zur Ortung von Rauschquellen
Acoustic measurement system for locating sources of noise

(30) Priorité: 09.01.2004 FR 0400202
(43) Date de publication de la demande: 27.07.2005
(73) Titulaire: MICRODB, 69130 Ecully (FR); AIRBUS France, 31300 Toulouse (FR)
(72) Inventeur: Beguet, Bernard, 69210 Saint Bel (FR)
(74) Mandataire: Maureau, Philippe

(56) Documents cités:
- US-A- 4 332 979
- US-A1- 2003 147 539
- US-B1- 6 310 832
- VAUCHER DE LA CROIX D ET AL: "HOLOGRAPHIE ACOUSTIQUE APPLIQUEE A DES MESURES INTERIEURES 3D EN HABITACLE" INGENIEURS DE L'AUTOMOBILE, RAIP. BOULOGNE, FR, no. 741, novembre 2000 (2000-11), pages 132-136,139, XP000987553 ISSN: 0020-1200
- PATENT ABSTRACTS OF JAPAN vol. 0162, no. 76 (P-1374), 19 juin 1992 (1992-06-19) & JP 04 072525 A (NIPPON TELEGR & TELEPH CORP <NTT>), 6 mars 1992 (1992-03-06)
- WILLIAMS E ET AL: "A prototype spherical array for interior noise investigations" JOURNAL OF THE ACOUSTIC SOCIETY OF AMERICA. VOL. 112, NO. 5, PART 2, [Online] novembre 2002 (2002-11), page 2348, XP002325567 Extrait de l'Internet: URL:http://scitation.aip.org/jasa/> [extrait le 2005-04-21]

## Description

La présente invention a pour objet un système de mesure acoustique permettant de localiser des sources de bruit et d'en mesurer l'intensité.

Le confort acoustique à l'intérieur d'une enceinte, et notamment d'un habitacle de véhicule, tel que véhicule automobile ou avion, est devenu un enjeu concurrenciel. Pour l'optimiser, il est nécessaire de connaître l'importance du rayonnement sonore des différents panneaux de l'habitacle, tels que vitre ou hublot, paroi habillée... pour réaliser des traitements d'isolation acoustique là où cela est nécessaire. A cet effet, il convient de disposer de moyens permettant de localiser les sources de bruit, ainsi que l'intensité sonore de telles sources.

Un dispositif connu comprend plusieurs microphones omnidirectionnels, par exemple au nombre de 24, disposés sur un plan. Le plan sur lequel sont situés les microphones, est orienté sensiblement perpendiculairement à la direction présumée de la source de bruit. Les microphones mesurent la pression acoustique résultant de l'émission de bruit, et fournissent chacun un signal à un dispositif de traitement. Ce dispositif de traitement permet d'obtenir un hologramme des sources de bruit.

L'hologramme des sources de bruit est obtenu en effectuant des calculs en différents points, les microphones mesurant la pression acoustiques pour chacun des points, en tenant compte du déphasage des distances des différents microphones vis-à-vis des différents points de mesure.

Si ces dispositifs conviennent pour des mesures de bruit extérieurs, par exemple pour mesure le bruit d'un moteur au banc, ils sont pris en défaut dès qu'ils sont placés à l'intérieur d'un habitacle, car ils ne savent pas distinguer les ondes qui arrivent devant ou derrière l'antenne constituée par l'ensemble des microphones.

L'hologramme des sources de bruit est obtenu en effectuant des calculs en différents points, les microphones mesurant la pression acoustique pour chacun des points, en tenant compte du déphasage des distances des différents microphones vis-à-vis des différents points de mesure.

Le document WILLIAMS E ET AL : « A prototype spherical array for interior noise investigations » JOURNAL OF THE ACOUSTIC SOCIETY OF AMERICA. VOL. 112, NO. 5, PART 2, décrit un système de mesure acoustique selon le préambule de la revendication 1.

Le document JP 04 072525 décrit un système de mesure acoustique de l'art antérieur.

Le problème technique à la base de l'invention est de fournir un système qui permette la localisation de façon précise et simple de sources de bruit à l'intérieur d'une enceinte.

A cet effet, le système qu'elle concerne comprend une pluralité de microphones orientés suivant plusieurs directions et montés dans un support de façon que chacun affleure une surface rigide, les différents microphones étant reliés à un dispositif de traitement du signal.

Chaque microphone "voit" surtout les sources de bruit placées en regard, le corps rigide jouant le rôle d'écran pour les sources de bruit placées derrière le corps rigide, par rapport au microphone considéré.

Pour chaque point de calcul, il faut tenir compte du déphasage entre les différents microphones dû non seulement à la distance entre les différents microphones et le point de calcul, mais aussi à la présence du corps rigide, les ondes acoustiques ne traversant pas la surface rigide, mais contournant celle-ci. Il en résulte une augmentation du temps de parcours de l'onde acoustique, pour les microphones situés derrière le corps rigide, par rapport à la source de bruit, ce qui permet une augmentation du déphasage entre les différents microphones et par suite une augmentation de la résolution au niveau de la localisation de la source de bruit.

Avantageusement, le support des microphones est revêtu d'un matériau absorbant, tel qu'une mousse cellulaire.

Suivant une forme d'exécution de ce système le support des microphones est constitué par une sphère.

Les différents microphones sont répartis sur la surface de la sphère. La sphère présente l'avantage qu'il s'agit d'une forme naturelle dont le comportement est facile à modéliser. Pour une position de source donnée, on peut calculer, pour chaque fréquence, le module et la phase de la pression acoustique mesurée par chaque microphone.

Suivant une autre forme d'exécution de ce système, le support des microphones est constitué par deux disques parallèles reliés entre eux par une portion de surface torique, les microphones étant placés dans les disques.

Cette seconde forme d'exécution présente l'avantage de bien séparer les deux demi espaces.

Il est également possible d'envisager différentes formes du support rigide, celui-ci pouvant avoir par exemple la forme d'une ellipsoïde ou d'un parallélépipède.

Le système de mesure selon l'invention consiste pour chaque groupe de microphones, à effectuer un traitement des signaux issus de ces microphones, pour fournir un hologramme des sources de bruit, c'est-à-dire une répartition des pressions ou intensités acoustiques en différents points d'une même surface.

Avantageusement, le système selon l'invention consiste, avant réalisation d'une mesure, à répartir un certain nombre de microphones appartenant à un seul ou à deux supports, en deux groupes.

Cette répartition d'un certain nombre de microphones appartenant à un seul ou à deux supports, en deux groupes, permet d'effectuer pour les deux groupes de microphones un traitement différentiel des signaux issus des différents microphones des deux groupes.

Ce traitement différentiel peut représenter le fonctionnement de l'oreille humaine.

Suivant un premier mode de mise en oeuvre, ce système consiste à effectuer un traitement de focalisation pour chaque groupe de microphones en chaque point où l'on souhaite savoir s'il existe une source de bruit, puis à effectuer pour chaque point de calcul la différence entre les signaux focalisés des deux groupes, cette différence étant nulle lorsque le point de calcul correspond à l'emplacement de la source de bruit.

Suivant un second mode de mise en oeuvre, ce système consiste à effectuer un traitement de focalisation pour un groupe de microphones en différents points, situés du côté de ce groupe, en vue de déterminer l'existence de sources de bruit en ces différents points, et à effectuer, pour l'autre groupe de microphones un traitement de focalisation en des points opposés des premiers, puis à effectuer pour chaque groupe de deux points la différence entre les signaux focalisés des deux groupes, cette différence étant maximale lorsque le point de calcul correspond à l'emplacement de la source de bruit.

De toute façon l'invention sera bien comprise à l'aide de la description qui suit, en référence au dessin schématique annexé, représentant, à titre d'exemples non limitatifs, plusieurs formes d'exécution de ce système.
Figure 1 est une vue en élévation d'un premier système.
Figure 2 est une vue en coupe d'un second système.
Figure 3 est une vue en élévation du système de figure 2.
Figures 4 et 5 sont deux vues schématisant le traitement des signaux reçus par deux groupes de microphones.
Figure 6 représente une variante du système de figures 4 et 5, dans laquelle les deux groupes de microphones appartiennent à deux supports distincts.

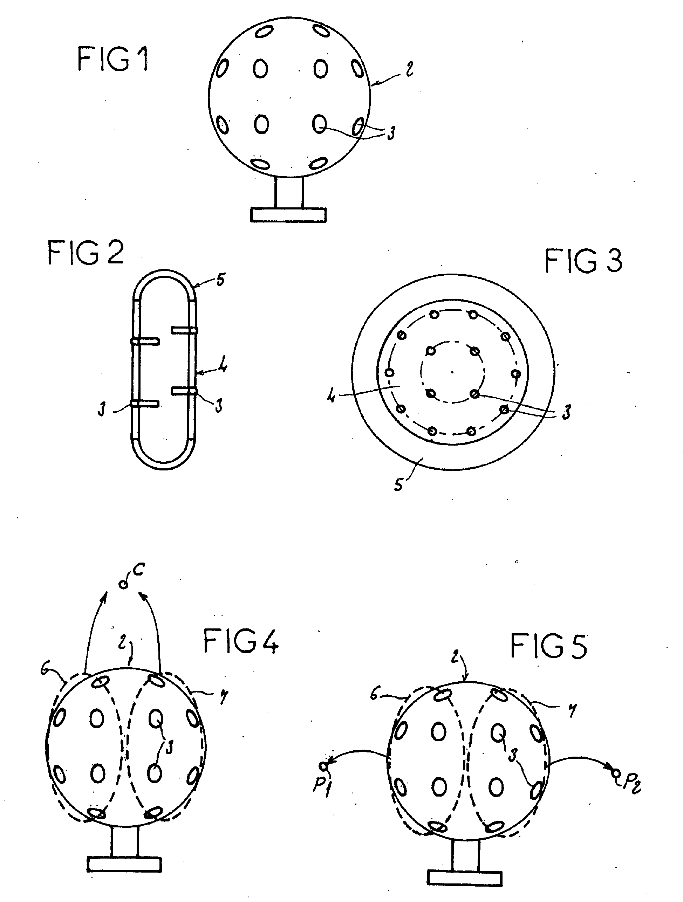

La figure 1 représente une sphère 2 réalisée en matériau rigide, et dont la surface extérieure peut être revêtue d'un matériau amortissant, tel que de la mousse, ou peut être perforée. A l'intérieur de la sphère 2 sont montés 24 microphones 3, qui affleurent chacun la surface de la sphère 2.

Les figures 2 et 3 représentent une variante d'exécution de ce système dans laquelle le corps rigide possède une forme différente, et est constitué par deux disques plans 4 reliés entre eux par une portion de tore 5. Comme montré à la figure 3, les microphones 3 affleurent les surfaces des deux disques. Cette réalisation a l'avantage de bien séparer les deux demi espaces.

Les figures 4 et 5 représentent le dispositif de figure 1, c'est-à-dire une sphère 2 équipée d'un certain nombre de microphones, en l'occurrence 24. Certains microphones sont associés pour former un groupe 6, alors que d'autres microphones sont associés pour former un groupe 7. Il est à noter que les groupes 6 et 7 ne contiennent pas nécessairement tous les microphones de la sphère 2. Il faut également remarquer que ce groupement est un groupement virtuel et non pas physique, ce groupement étant réalisé au niveau du traitement des signaux reçus par les différents microphones des deux groupes 6 et 7.

Les figures 4 et 5 représentent la mise en oeuvre d'un traitement dit différentiel. A cet effet, le traitement permet d'estimer la position de la source de bruit maximal. Pour chaque point où l'on cherche à savoir s'il y a une source de bruit, on doit calculer un estimateur différentiel de la façon suivante. Il est procédé tout d'abord à un traitement de focalisation pour un même point de calcul C pour les deux groupes 6 et 7 de microphones. On calcule la fonction différence des deux résultats des groupes de microphones. Ce calcul est répété pour tous les points où l'on souhaite savoir s'il y a une source. Dans la forme d'exécution représentée à la figure 4, la focalisation s'effectue sur le même point C pour les deux groupes 6 et 7, et la fonction différence est minimale, lorsque le point de calcul C est situé à la position de la source de bruit.

La figure 5 représente une variante d'exécution dans laquelle les mêmes éléments sont désignés par les mêmes références que précédemment. Dans ce cas, il est effectué un traitement de focalisation pour le groupe 6 de microphones, en un point P1 qui est le point dont on recherche s'il correspond à la source de bruit, tandis que la focalisation pour les microphones du groupe 7 est réalisée en un point P2 situé du côté opposé au point P1. On calcule la fonction différence entre les deux résultats de focalisation. Dans cette seconde solution, la fonction différence est maximale lorsque le point de calcul P1 est situé à la position de la source réelle de bruit.

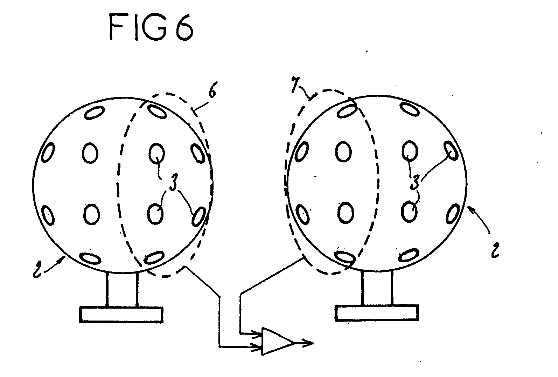

La figure 6 représente une variante d'exécution dans laquelle les groupes 6 et 7 de microphones 3 appartiennent à deux sphères 2 distinctes.

Comme il ressort de ce qui précède, l'invention apporte une grande amélioration à la technique existante, en fournissant un dispositif de structure simple permettant de déterminer la localisation d'une source de bruit et d'en mesurer l'intensité, y compris à l'intérieur d'un habitacle en distinguant les ondes qui arrivent devant ou derrière l'antenne formée par différents microphones, et en fournissant un mode de traitement des signaux améliorant encore les conditions de localisation d'une source de bruit.

Comme il va de soi l'invention ne se limite pas aux seules formes d'exécution de ce système, décrites ci-dessus à titre d'exemple, elle en embrasse au contraire toutes les variantes. C'est ainsi notamment que le support rigide des microphones pourrait avoir une forme différente, par exemple une forme parallélépipédique, ou encore que le traitement des signaux pourrait ne pas comporter de traitement différentiel, mais la simple réalisation d'un hologramme de façon connue en soi, sans que l'on sorte pour autant du cadre de l'invention.

## Revendications

1. Système de mesure acoustique permettant de localiser des sources de bruit et d'en mesurer l'intensité, comprenant une pluralité de microphones (3) orientés suivant plusieurs directions et montés dans un support (2), les différents microphones (3) étant reliés à un dispositif de traitement du signal, **caractérisé en ce que** les microphones (3) sont montés de façon à ce que chacun affleure une surface rigide, et **en ce que** le dispositif de traitement du signal est adapté pour traiter par focalisation des signaux issus de ces microphones (3) pour fournir un hologramme des sources de bruit, c'est-à-dire une répartition des pressions ou intensités acoustiques en différents points d'une même surface.

2. Système selon la revendication 1, **caractérisé en ce que** le support (2) des microphones (3) est revêtu d'un matériau absorbant, tel qu'une mousse cellulaire

3. Système selon l'une des revendications 1 et 2, **caractérisé en ce que** le support des microphones est constitué par une sphère (2).

4. Système selon l'une des revendications 1 et 2, **caractérisé en ce que** le support des microphones est constitué par deux disques parallèles (4) reliés entre eux par une portion de surface torique (5), les microphones (3) étant placés dans les disques (4).

5. Système selon l'une des revendications 1 à 4, **caractérisé en ce qu'**il consiste, avant réalisation d'une mesure, à répartir un certain nombre de microphones (3) appartenant à un seul ou à deux supports (2), en deux groupes (6, 7).

6. Système selon la revendication 5, **caractérisé en ce qu'**il consiste à effectuer pour les deux groupes (6, 7) de microphones un traitement différentiel des signaux issus des différents microphones (3) des deux groupes.

7. Système selon la revendication 6, **caractérisé en ce qu'**il consiste à effectuer un traitement de focalisation pour chaque groupe (6, 7) de microphones (3) en chaque point (C) où l'on souhaite savoir s'il existe une source de bruit, puis à effectuer pour chaque point de calcul la différence entre les signaux focalisés des deux groupes (6, 7), cette différence étant nulle lorsque le point de calcul (C) correspond à l'emplacement de la source de bruit.

8. Système selon la revendication 6, **caractérisé en ce qu'**il consiste à effectuer un traitement de focalisation pour un groupe (6, 7) de microphones (3) en différents points (P1) situés du côté de ce groupe (6), en vue de déterminer l'existence de sources de bruit en ces différents points, et à effectuer, pour l'autre groupe (7) de microphones (3) un traitement de focalisation en des points (P2) opposés des premiers, puis à effecteur pour chaque groupe (6, 7) de deux points la différence entre les signaux focalisés des deux groupes, cette différence étant maximale lorsque le point de calcul correspond à l'emplacement de la source de bruit.

## Claims

1. Acoustic measurement system making it possible to locate sources of noise and to measure the intensity thereof, comprising a plurality of microphones (3) oriented in several directions and mounted in a support (2), the various microphones (3) being connected to a signal-processing device, **characterized in that** the microphones (3) are mounted so that each one is flush with a rigid surface, and **in that** the signal-processing device is suitable for processing by focusing of the signals originating from these microphones (3) in order to provide a hologram of the sources of noise, that is to say a distribution of acoustic pressures or intensities at different points of one and the same surface.

2. System according to Claim 1, **characterized in that** the support (2) of the microphones (3) is coated with an absorbent material, such as a cellular foam.

3. System according to one of Claims 1 and 2, **characterized in that** the support for the microphones is in the form of a sphere (2).

4. System according to one of Claims 1 and 2, **characterized in that** the support for the microphones is made up of two parallel discs (4) connected together by a portion of toroidal surface (5), the microphones (3) being placed in the discs (4).

5. System according to one of Claims 1 to 4, **characterized in that** it consists, before the taking of a measurement, in distributing a certain number of microphones (3) belonging to only one or two supports (2), in two groups (6, 7).

6. System according to Claim 5, **characterized in that** it consists in carrying out, for the two groups (6, 7) of microphones, a differential processing of the signals originating from the various microphones (3) of the two groups.

7. System according to Claim 6, **characterized in that** it consists in carrying out a focus processing for each group (6, 7) of microphones (3) at each point (C) where it is desired to know if there is a source of noise, and then, for each computation point, to measure the difference between the focused signals of the two groups (6, 7), this difference being zero when the computation point (C) corresponds to the location of the source of noise.

8. System according to Claim 6, **characterized in that** it consists in carrying out a focus processing for one group (6, 7) of microphones (3) at different points (PI) situated on the side of this group (6), for the purpose of determining the existence of sources of noise at these various points, and in carrying out, for the other group (7) of microphones (3), a focus processing at points (P2) opposite to the first, and then in measuring, for each group (6, 7) of two points, the difference between the focused signals of the two groups, this difference being maximal when the computation point corresponds to the location of the source of noise.

## Patentansprüche

1. Akustisches Messsystem, das es ermöglich, Geräuschquellen zu lokalisieren und ihre Stärke zu messen, mit mehreren Mikrophonen (3), die in mehrere Richtungen ausgerichtet und in einen Träger (2) montiert sind, wobei die verschiedenen Mikrophone (3) mit einer Signalverarbeitungseinrichtung verbunden sind, **dadurch gekennzeichnet, dass** die Mikrophone (3) so montiert sind, dass jedes mit einer steifen Fläche auf gleicher Höhe liegt, und dass die Signalverarbeitungseinrichtung geeignet ist, um von diesen Mikrophonen (3) stammende Signale durch Fokussierung zu verarbeiten, um ein Hologramm der Geräuschquellen, d.h. eine Verteilung der Schalldrücke oder -stärken an verschiedenen Punkten der gleichen Fläche, zu liefern.

2. System nach Anspruch 1, **dadurch gekennzeichnet, dass** der Träger (2) der Mikrophone (3) mit einem absorbierenden Werkstoff wie einem Schaumstoff verkleidet ist.

3. System nach einem der Ansprüche 1 und 2, **dadurch gekennzeichnet, dass** der Träger der Mikrophone aus einer Kugel (2) besteht.

4. System nach einem der Ansprüche 1 und 2, **dadurch gekennzeichnet, dass** der Träger der Mikrophone aus zwei parallelen Scheiben (4) besteht, die miteinander über einen ringförmigen Flächenabschnitt (5) verbunden sind, wobei die Mikrophone (3) in den Scheiben (4) angeordnet sind.

5. System nach einem der Ansprüche 1 bis 4, **dadurch gekennzeichnet, dass** es vor der Durchführung einer Messung darin besteht, eine bestimmte Anzahl von Mikrophonen (3), die zu einem oder zwei Trägern (2) gehören, in zwei Gruppen (6, 7) aufzuteilen.

6. System nach Anspruch 5, **dadurch gekennzeichnet, dass** es darin besteht, für die zwei Gruppen (6, 7) von Mikrophonen eine differenzielle Verarbeitung der von den verschiedenen Mikrophonen (3) der zwei Gruppen stammenden Signale durchzuführen.

7. System nach Anspruch 6, **dadurch gekennzeichnet, dass** es darin besteht, eine Fokussierungsverarbeitung für jede Gruppe (6, 7) von Mikrophonen (3) an jedem Punkt (C) durchzuführen, wo man wissen möchte, ob es eine Geräuschquelle gibt, dann für jeden Berechnungspunkt die Differenz zwischen den fokussierten Signalen der zwei Gruppen (6, 7), zu berechnen, wobei diese Differenz Null ist, wenn der Berechnungspunkt (C) dem Ort der Geräuschquelle entspricht.

8. System nach Anspruch 6, **dadurch gekennzeichnet, dass** es darin besteht, eine Fokussierungsverarbeitung für eine Gruppe (6, 7) von Mikrophonen (3) an verschiedenen Punkten (P1) durchzuführen, die sich auf der Seite dieser Gruppe (6) befinden, um das Vorhandensein von Geräuschquellen an diesen verschiedenen Punkten zu bestimmen, und für die andere Gruppe (7) von Mikrophonen (3) eine Fokussierungsverarbeitung an den ersten entgegengesetzten Punkten (P2) durchzuführen, dann für jede Gruppe (6, 7) von zwei Punkten die Differenz zwischen den fokussierten Signalen der zwei Gruppen zu berechnen, wobei diese Differenz maximal ist, wenn der Berechnungspunkt dem Ort der Geräuschquelle entspricht.
